# FASCICULE DE BREVET EUROPEEN

(11) **EP 1 556 934 B1**
(45) Date de publication et mention de la délivrance du brevet: **06.06.2007**
(21) Numéro de dépôt: 03757610.5
(22) Date de dépôt: 14.10.2003
(51) Int. Cl.: H02G 7/20

(54) **APPAREIL ET METHODE POUR MODIFIER UN ECOULEMENT DE PUISSANCE DANS UN TRONCON D UNE LIGNE DE TRANSPORT D ENERGIE ELECTRIQ UE**
VORRICHTUNG UND VERFAHREN UM DEN LEISTUNGSFLUSS IN EINEM LEITUNGSABSCHNITT EINER HOCHSPANNUNGSLEITUNG ZU ÄNDERN
APPARATUS AND METHOD FOR MODIFYING A POWER FLUX IN AN ELECTRICAL TRANSMISSION LINE SECTION

(30) Priorité: 22.10.2002 CA 2409284
(43) Date de publication de la demande: 27.07.2005
(73) Titulaire: HYDRO-QUEBEC, Montréal Québec H2Z 1A4 (CA)
(72) Inventeur: COUTURE, Pierre, Boucherville, Québec J4B 4A4 (CA)
(74) Mandataire: Feray, Valérie
(86) Numéro de dépôt international: PCT/CA2003/001560
(87) Numéro de publication internationale: WO 2004/038880

(56) Documents cités:
- WO-A-00/35061
- US-A- 6 018 152

## Description

La présente invention vise un appareil et une méthode pour modifier un écoulement de puissance dans un tronçon d'une ligne de transport d'énergie électrique avec des phases à conducteurs multiples. Dans le présent texte, nous appellerons "ligne de phase" ce qui est communément appelé par l'homme de l'art "phase". L'appareil et la méthode servent à modifier l'écoulement de puissance dans un tronçon d'une ligne de transport d'énergie électrique et permettent entre autres mais non exclusivement de dégivrer une ligne de transport d'énergie électrique, de modifier l'écoulement de puissance à travers une ligne de transport d'énergie électrique de façon statique ou dynamique, de stabiliser un réseau de lignes de transport d'énergie électrique, de filtrer des harmoniques d'une ligne de transport d'énergie électrique, d'amortir ou de dissiper de l'énergie transportée par une ligne de transport d'énergie électrique, ou bien même de limiter le courant d'une ligne de transport d'énergie électrique.

Connu dans l'art, il existe le brevet américain n° US 6,486,569 B2, délivré le 26 novembre 2002 et correspondant à la demande WO-A-0035061 et nommant comme inventeur M. Pierre COUTURE, qui est également l'inventeur de la présente invention. Ce brevet décrit une méthode de gestion d'écoulement de puissance dans un réseau de transport de puissance électrique. La méthode comprend les étapes de fournir des unités de commutation qui sont montées sur des parties isolées de pylônes de lignes de transport d'énergie électrique pour commuter le courant d'au moins un conducteur d'une pluralité de conducteurs de phase qui sont isolés électriquement les uns des autres, ladite commutation de conducteurs permettant un changement d'impédance qui module l'écoulement de puissance. La méthode comprend également une étape de gestion de l'écoulement de puissance dans les tronçons de la ligne de transport d'énergie électrique, en changeant l'impédance série de la ligne au moyen d'un contrôle des unités de commutation.

Également connu dans l'art, il existe la publication internationale n° WO 02/41459 A1, publiée le 23 mai 2002, et nommant comme inventeur M. Pierre COUTURE, qui est également inventeur de la présente demande. Ce brevet décrit un appareil et une méthode de commutation pour varier l'impédance d'une ligne de phase d'un tronçon d'une ligne de transport d'énergie électrique. Pour chacun d'au moins un des n conducteurs de la ligne de phase, une composante passive et une paire d'interrupteurs électromécanique et électronique sont prévues. La paire d'interrupteurs est apte à connecter et déconnecter de façon sélective la composante passive en série avec le conducteur correspondant, en réponse à des signaux de commande. Des moyens sont également prévus pour commander chaque paire d'interrupteurs en fonction de conditions d'opération courantes de la ligne de phase.

Également connu dans l'art antérieur, il existe la publication internationale n° WO 00/35061, publiée le 15 juin 2000, et nommant comme inventeur M. Pierre COUTURE qui est également l'inventeur de la présente demande. Un brevet américain correspondant à cette demande internationale a également été délivré le 28 mai 2002 sous le n° US 6,396,172 B1. Ces documents décrivent un appareil et une méthode de commutation pour un tronçon d'une ligne de transport d'énergie électrique comportant plusieurs lignes de phase. Chaque ligne de phase comportant plusieurs conducteurs isolés électriquement les uns des autres et branchés en parallèle pour conduire un courant de phase. Des paires d'interrupteurs électromécanique et électronique branchés en parallèle sont prévues pour ouvrir et fermer de façon sélective les conducteurs de chaque ligne de phase de façon à conduire le courant de phase correspondant à travers un ou plusieurs conducteurs. Des moyens de commande sont également prévus pour commander les paires d'interrupteurs électromécanique et électronique en fonction des conditions d'opération courantes du tronçon.

Un des inconvénients que l'on retrouve dans l'ensemble des appareils et méthodes mentionnés ci-dessus, réside dans le fait que les stratégies offertes à l'utilisateur pour modifier l'écoulement de puissance dans un tronçon d'une ligne de transport d'énergie électrique sont limitées. De plus, la vitesse d'opération des appareils est limitée en fonction de la fréquence du courant circulant sur la ligne de transport.

Un des objectifs de la présente invention est de proposer un appareil et une méthode pour modifier l'écoulement de puissance dans un tronçon d'une ligne de transport d'énergie électrique selon une plage de possibilités beaucoup plus grande que ce qui est possible dans l'art antérieur, d'une façon efficace et sécuritaire.

Un autre objectif de la présente invention est de permettre une modification de l'écoulement de puissance de façon plus rapide que ce qui est possible dans l'art antérieur. Ainsi, pour une ligne de transport fonctionnant à 60 Hz, la modification de l'écoulement de puissance peut se faire dans une période de temps inférieure à 8 millisecondes sans attendre le passage du courant par zéro.

Un autre objectif de la présente invention, qui est obtenu par un mode de réalisation préférentiel, est de proposer un appareil et une méthode pour modifier un écoulement de puissance dans un tronçon d'une ligne de transport d'énergie électrique, qui permettent un écoulement de puissance dudit tronçon directement vers un autre tronçon de la ligne de transport d'énergie électrique.

Les objets, avantages et autres caractéristiques de la présente invention deviendront plus apparents à la lecture de la description suivante qui ne se veut pas restrictive, de différents modes de réalisation préférés donnés à titre d'exemple seulement, avec référence aux dessins ci-joints.

### RÉSUMÉ DE L'INVENTION:

La présente invention vise un appareil pour modifier un écoulement de puissance dans un tronçon d'une ligne de transport d'énergie électrique, chaque tronçon incluant des lignes de phase chacune ayant n conducteurs isolés électriquement les uns des autres et court-circuités aux extrémités du tronçon, l'appareil comprenant une unité d'échange de puissance incluant: un convertisseur de puissance pour convertir de la puissance entre des première et deuxième paires de bornes, la première paire de bornes étant connectée en série avec un conducteur du tronçon; et un élément électrique branché à la deuxième paire de bornes et apte à faire circuler de la puissance à travers le convertisseur de puissance pour modifier ledit écoulement de puissance.

La présente invention vise aussi une méthode pour modifier un écoulement dans un tronçon d'une ligne de transport d'énergie électrique, chaque tronçon incluant des lignes de phase chacune ayant n conducteurs électriquement isolés les uns des autres et court-circuités aux extrémités du tronçon, la méthode comprenant les étapes suivantes: a) fournir une unité de puissance incluant un convertisseur de puissance pour convertir de la puissance entre des première et deuxième paires de bornes, et un élément électrique branché à la deuxième paire de bornes et apte à faire circuler de la puissance à travers le convertisseur de puissance, la première paire de bornes étant connectée en série avec au moins un conducteur de tronçon; et b) convertir de la puissance entre les première et deuxième paires de bornes au moyen du convertisseur de puissance pour modifier ledit écoulement de puissance.

### BRÈVE DESCRIPTION DES DESSINS :

La Figure 1 est un diagramme de circuit schématique montrant deux tronçons d'une ligne de transport d'énergie électrique, et un appareil selon un mode de réalisation préféré de la présente invention.
La Figure 2 est un diagramme d'un circuit schématique montrant deux tronçons d'une ligne de transport d'énergie électrique, et un appareil selon un mode de réalisation préféré de la présente invention.
La Figure 3 est un diagramme de circuit schématique montrant deux tronçons d'une ligne de transport d'énergie électrique, et un appareil selon un mode de réalisation préféré de la présente invention.
La Figure 4 est un diagramme de circuit schématique montrant deux tronçons d'une ligne de transport d'énergie électrique, et un appareil selon un mode de réalisation préféré de la présente invention.
La Figure 5 est un diagramme de circuit schématique montrant deux tronçons d'une ligne de transport d'énergie électrique, et un appareil selon un mode de réalisation préféré de la présente invention.
La Figure 6 est un diagramme de circuit schématique montrant deux tronçons d'une ligne de transport d'énergie électrique, et un appareil selon un mode de réalisation préféré de la présente invention.
La Figure 7 est un diagramme de circuit schématique montrant deux tronçons d'une ligne de transport d'énergie électrique, et un appareil selon un mode de réalisation préféré de la présente invention.
La Figure 8 est un diagramme de circuit schématique montrant deux tronçons d'une ligne de transport d'énergie électrique, et un appareil selon un mode de réalisation préféré de la présente invention.
La Figure 9 est un diagramme de circuit schématique montrant deux tronçons d'une ligne de transport d'énergie électrique, et un appareil selon un mode de réalisation préféré de la présente invention.
La Figure 10 est une vue de côté d'un pylône supportant une ligne de transport d'énergie électrique sur lequel un appareil selon un mode de réalisation préféré de la présente invention est monté.
La Figure 11 est une vue en perspective d'un élément de l'appareil montré à la Figure 10.
La Figure 12 est une vue en perspective d'un autre élément de l'appareil montré à la Figure 10.
La Figure 13 est une vue de face du pylône montré à la Figure 10.

### DESCRIPTION DÉTAILLÉE DES DESSINS :

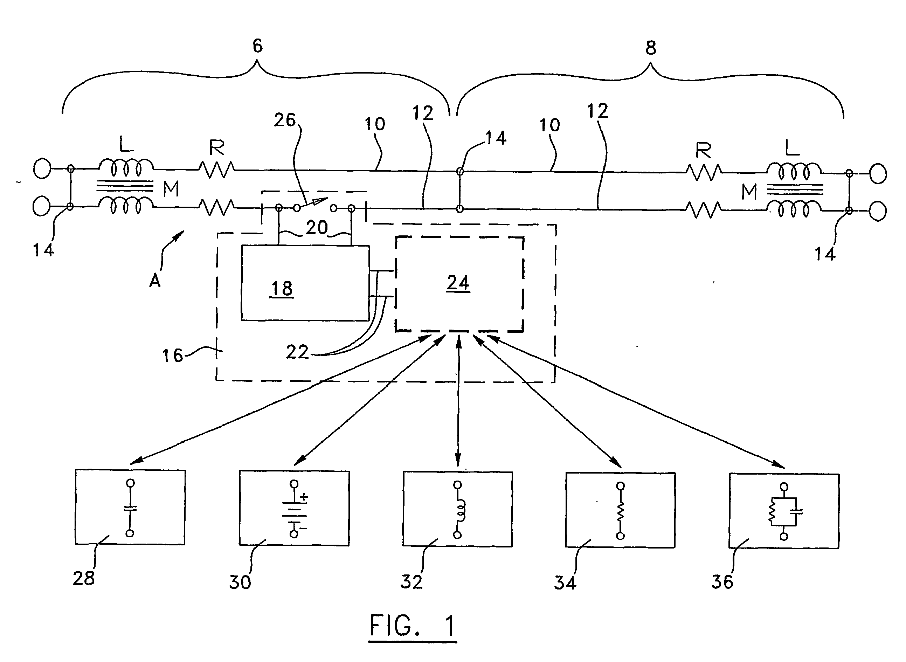

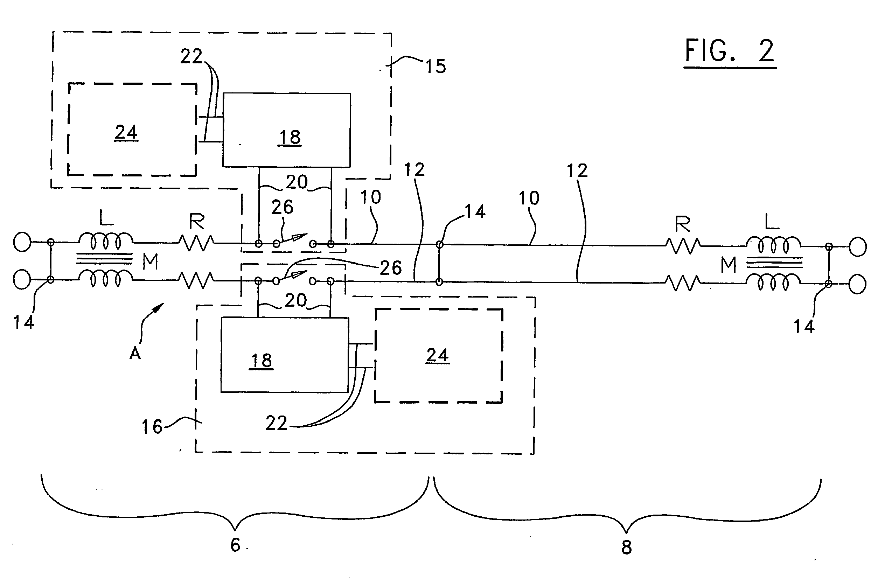

Si on se réfère maintenant à la Figure 1, on peut voir un diagramme de circuit schématique montrant deux tronçons 6 et 8 d'une ligne de transport d'énergie électrique. Une ligne de transport d'énergie peut bien sûr être segmentée en une multitude de tronçons. Généralement, une ligne de transport d'énergie électrique comporte trois lignes de phase A, B et C. Dans cette Figure 1 et dans les Figures 2 à 9, afin de ne pas surcharger les figures, une seule ligne de phase A est montrée par tronçons même si un tronçon comporte normalement plusieurs lignes de phase. De plus, il faut bien comprendre que dans chaque cas montré dans les Figures 1 à 9, un appareil selon la présente invention peut être installé sur chaque ligne de phase du tronçon. Chaque ligne de phase a n conducteurs 10 et 12 isolés électriquement les uns des autres et court-circuités aux extrémités 14 de chaque tronçon. Pour chaque tronçon, un circuit équivalent de l'inductance propre L, de l'inductance mutuelle M et de la résistance R est indiqué. Pour des fins de discussion, les effets capacitifs de la ligne sont négligés. La ligne de phase A du tronçon 6 est munie d'un appareil selon un mode de réalisation préféré de la présente invention.

L'appareil selon la présente invention comprend une unité d'échange de puissance 16 incluant un convertisseur de puissance 18 pour convertir de la puissance entre des première et deuxième paires de bornes 20 et 22. La paire de bornes 20 est connectée en série avec au moins un conducteur 12 du tronçon 6. L'unité d'échange de puissance inclut également un élément électrique 24 branché à la paire de bornes 22. Cet élément électrique 24 est apte à faire circuler de la puissance à travers le convertisseur de puissance 18 pour modifier l'écoulement de puissance dans le tronçon 6 de la ligne de transport d'énergie électrique. De préférence, l'unité d'échange de puissance comprend en outre un commutateur 26 pour connecter et déconnecter de façon sélective la paire de bornes 20 en série avec le conducteur 12 du tronçon 6, en réponse à des signaux de contrôle. De préférence, l'appareil comprend n-1 unités de puissance, n étant le nombre de conducteurs formant un tronçon. Par exemple, dans le cas présent, la ligne de phase A du tronçon 6 est formée de deux conducteurs donc le nombre n est égal à 2.

En général, selon ce mode de réalisation préféré, les n-1 unités de puissance sont aptes à être branchées au moyen de leur commutateur 26 respectivement à n-1 conducteurs d'une ligne de phase appartenant au tronçon. Dans le cas présent, le nombre de conducteurs étant égal à 2, l'unité d'échange de puissance est apte à être branchée au moyen de son commutateur 26 au conducteur 12 de la ligne de phase A appartenant au tronçon 6. De préférence, l'élément électrique 24 est choisi parmi les éléments électriques suivants : un condensateur 28, une batterie 30, une inductance 32, une résistance 34 et une résistance branchée en parallèle à un condensateur 36. De préférence, le convertisseur 18 est un convertisseur intégré à une ligne de phase de la ligne à très haute tension.

Selon la présente invention, de préférence, chaque tronçon est composé d'une ligne de transmission à plusieurs lignes de phase sur laquelle un appareil selon la présente invention est monté. La ligne est utilisée comme un transformateur de couplage. Le convertisseur 18 avec l'élément électrique 24 agissent comme source ou un drain d'énergie contrôlable en tension ou en courant. Le convertisseur contrôle la phase, l'amplitude et dans certains cas la fréquence de manière à produire des fonctions connues sous l'appellation anglaise « flexible AC transmission system » (FACTS). Un FACTS permet de faire un contrôle d'impédance, une stabilisation, une filtration, une limitation de courant, un freinage, etc. L'élément électrique peut également remplir la fonction d'une unité de stockage lorsqu'il est réalisé par exemple par un condensateur, une batterie, une pile à combustible, etc. Le remplacement d'une unité de stockage par une résistance électrique ou par une combinaison d'une résistance et d'un condensateur permet d'extraire de la puissance active. La résistance électrique peut être une résistance variable.

Le convertisseur 18 peut être constitué d'un simple pont de diode, de thyristors ou d'un modulateur par impulsions de largeur variable (PWV). Les commutateurs (non montrés) utilisés dans le convertisseur peuvent être des diodes, des thyristors, des transistors bipolaires à porte isolée (lGBT), des transistors à effet de champ de semi-conducteur d'oxyde de métal (MOSFET), des MCT (Metal Oxide Semiconductor Controlled Thyristor), des GTO (Gate Turn Off Semiconductor) etc. Le convertisseur 18 ainsi que l'élément électrique 24 sont montés directement sur la ligne de phase A du tronçon 6 sans référence à la terre ou aux autres phases. L'élément électrique 24 lorsqu'il réalise une unité de stockage peut être un condensateur, une inductance, une batterie ou une pile à combustible. L'utilisation d'un tronçon d'une ligne de transport d'énergie électrique comme transformateur de couplage et l'utilisation d'un appareil selon la présente invention permet de réduire le coût de réalisation d'un FACTS. Les tronçons avec convertisseurs peuvent être distribués le long d'une ligne de transmission. Cette technologie présente l'avantage de n'agir que sur une partie de la puissance transitée sur la ligne. Cette fraction de puissance affectée dépend du nombre de tronçons avec convertisseurs et du nombre de conducteurs avec convertisseurs.

La tension aux bornes des convertisseurs est proportionnelle à la longueur du tronçon et du courant dans la ligne de phase. La distribution des tronçons avec convertisseurs le long d'une ligne de transport d'énergie électrique réduit les coûts des convertisseurs en plus de permettre une production en série des convertisseurs. Cette distribution des convertisseurs le long d'une ligne de transport d'énergie électrique augmente la fiabilité du système car la perte d'un convertisseur n'affecte pas le fonctionnement des autres convertisseurs situés le long de la ligne et permet de continuer de modifier l'écoulement de puissance à travers la ligne avec une enveloppe de modulation réduite. Étant donné que les unités de puissance selon la présente invention peuvent être installées directement sur la ligne, cela permet une réduction de l'espace utilisé au sol. De préférence, pour un tronçon ayant trois lignes de phase, un appareil selon la présente invention agit simultanément sur les trois phases. Cependant, dans certains cas, l'appareil selon la présente invention pourrait agir seulement sur une ou deux des phases, pour équilibrer une ou des phases.

Le commutateur 26 qui peut être un commutateur mécanique, électronique ou électromécanique, peut être utilisé pour rétablir la ligne dans son état original lorsque requis. Dans le cas d'un tronçon à plus de deux conducteurs par ligne de phase, on peut relier chacun des conducteurs à un convertisseur ou les regrouper suivant différentes configurations. Par exemple, pour une ligne de 735 kV à quatre conducteurs par ligne de phase, on peut prévoir différents agencements de convertisseurs simples ou doubles qui seront présentés en référence aux Figures 2 à 9.

La présente invention permet également de réaliser une méthode pour modifier l'écoulement de puissance dans un tronçon d'une ligne de transport d'énergie électrique. La méthode comprend l'étape a) de fournir l'unité de puissance qui inclut un convertisseur de puissance 18 pour convertir de la puissance entre les première et deuxième paires de bornes 20 et 22, et un élément électrique 24 branché à la deuxième paire de bornes 22 et apte à faire circuler de la puissance à travers le convertisseur de puissance. La première paire de bornes est bien sûr connectée en série avec le conducteur 12 de la ligne de phase A du tronçon 6. La méthode comprend également l'étape b) de convertir de la puissance entre les première et deuxième paires de bornes 20 et 22 au moyen du convertisseur de puissance 18 pour modifier ledit écoulement de puissance dans le tronçon 2. De préférence, la méthode comprend en outre l'étape c) de connecter et déconnecter de façon sélective la première paire de bornes 20 en série avec le conducteur 12 au moyen du commutateur 26 en réponse à des signaux de contrôle. De préférence, dans l'étape a), n-1 unités d'échange de puissance sont fournies, dans l'étape b), la puissance est convertie par au moins un des n-1 convertisseurs de puissance, et dans l'étape c), les n-1 unités de puissance sont connectées et déconnectées au moyen de leur commutateur 26 respectivement à n-1 conducteurs de la ligne de phase A du tronçon 6.

Si on se réfère maintenant à la Figure 2, l'appareil selon la présente invention comprend au moins une unité de puissance additionnelle pour former un ensemble de n unités de puissance. Dans ce cas-ci, le nombre n est égal à 2. Les deux unités de puissance 15 et 16 sont aptes à être branchées au moyen de leur commutateur 26 respectivement aux deux conducteurs 10 et 12 de la ligne de phase A appartenant au tronçon 6.

Dans le cas présent, pour des raisons de sécurité, afin de prévenir que tous les conducteurs d'un même tronçon s'ouvrent simultanément, il est important qu'un même dispositif de commutation regroupe les commutateurs 26 associés à une même ligne de phase. Ce dispositif de commutation sécuritaire qui prévient l'ouverture simultanée de tous les conducteurs d'une même ligne de phase pourrait être par exemple celui proposé dans la demande internationale publiée sous le n° WO 00/35061.

Dans le cas présent, selon la méthode proposée par la présente invention, dans l'étape a), une unité de puissance additionnelle est fournie pour former un ensemble de deux unités de puissance 15 et 16; dans l'étape b), la puissance est convertie par au moins un des deux convertisseurs de puissance 18; et dans l'étape c), les deux unités de puissance 15 et 16 sont connectées et déconnectées au moyen de leur commutateur 26 respectivement aux deux conducteurs 10 et 12 de la ligne de phase A du tronçon 6. II est à noter également que dans le présent mode de réalisation, de préférence bien sûr, le convertisseur 18 et l'élément électrique 24 de l'unité de puissance 15 pourraient être omis pour simplement garder le commutateur 26 branché en série avec le conducteur 10. L'agencement montré à la Figure 2 pourrait permettre de déglacer les conducteurs des lignes de phase du tronçon 6 et de réaliser des fonctions FACTS.

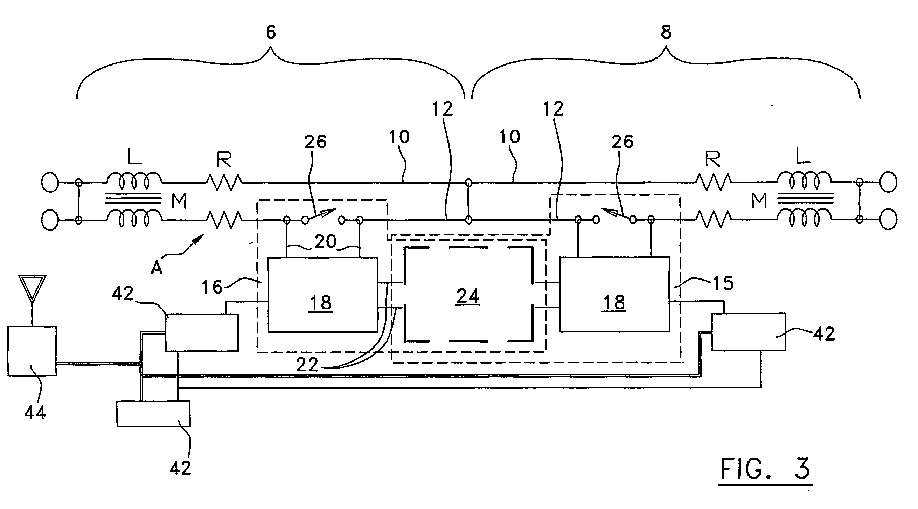

Si on se réfère maintenant à la Figure 3, l'appareil selon la présente invention comprend une unité de puissance additionnelle 15 pour former un ensemble de deux unités de puissance 15 et 16. Les deux unités de puissance 15 et 16 sont aptes à être branchées au moyen de leur commutateur 26 respectivement au conducteur 12 de la ligne de phase A appartenant respectivement aux tronçons 6 et 8. Les deux unités de puissance 15 et 16 partageant un élément électrique commun 24 pour permettre un écoulement de puissance entre les deux tronçons 6 et 8.

Sur cette Figure 3, sont également montrés des contrôleurs 40, une alimentation 42, et un émetteur-récepteur 44. Les éléments mentionnés précédemment avec des senseurs (non montrés) permettent de contrôler les convertisseurs 18 à partir d'une station de commande (non montrée) de manière à réaliser des fonctions de FACTS pour contrôler l'écoulement de puissance dans les tronçons 6 et 8 et par le fait même contrôler l'écoulement de puissance dans un réseau de transport d'énergie électrique. L'alimentation 42 fonctionne par couplage capacitif ou par couplage par induction ou à l'aide d'un panneau solaire ou d'une combinaison de ces éléments. Bien sûr, les contrôleurs 40, l'alimentation 42 et l'émetteur récepteur 44 peuvent être utilisés sur chacun des modes de réalisation montrés aux Figures 1 à 9. Ces éléments de contrôle, soit les contrôleurs 40, l'alimentation 42 et l'émetteur-récepteur 44, pourraient être réalisés tel que cela est proposé dans la demande internationale publiée sous le n° WO 02/41459.

Le mode de réalisation montré à la Figure 3 permet de réaliser un convertisseur double intégré à une ligne de phase d'une ligne de transmission fonctionnant à haute et très haute tension. La puissance active ou réactive extraite du tronçon 6 est entreposée dans l'élément électrique 24 et injectée dans le tronçon 8 avec l'aide du convertisseur 18 de l'unité de puissance 15. La phase, l'amplitude du voltage ou du courant et la fréquence peuvent être contrôlées indépendamment au convertisseur 18 de l'unité 16 ou au convertisseur 18 de l'unité 15 dépendamment des effets désirés. Normalement, les bornes 20 sont aptes à recevoir un courant alternatif et les bornes 22 sont aptes à recevoir un courant continu. Toutefois, il n'est pas exclu que les bornes 22 soient aptes à recevoir un courant alternatif. La puissance active ou réactive pourrait aussi s'inverser et ainsi passer du tronçon 8 au tronçon 6 à travers les convertisseurs 18 des unités 15 et 16. Dans d'autres cas, les deux convertisseurs peuvent travailler en parallèle et extraire ou injecter la puissance de l'élément électrique 24 qui peut constituer un module de stockage ou de dissipation. Les deux convertisseurs et l'élément électrique peuvent être localisés dans les mêmes boîtiers de manière à réduire les émissions électromagnétiques et les coûts. Le système peut permettre de réaliser des fonctions de contrôle d'écoulement de puissance statique ou dynamique, de réaliser des fonctions de filtre harmonique ou sous-harmonique, de réaliser des fonctions dissipatives, de permettre le déglaçage des lignes, etc. La communication entre les convertisseurs peut être effectuée par air ou à l'aide d'une fibre optique.

L'appareil montré à la Figure 3 pourrait être utilisé pour réaliser un filtre sous-synchrone non dissipatif. Le convertisseur 18 de l'unité 16 extrait alors du tronçon 6 de la puissance de la sous-harmonique de manière à réduire cette sous-harmonique et la transférer dans l'élément électrique 24 réalisé par une unité de stockage capacitif. Le convertisseur 18 de l'unité 15 prend alors cette puissance de l'élément électrique 24 et la réinjecte à la fréquence du réseau dans le tronçon 8.

L'appareil montré à la Figure 3 peut être installé sur un bus dans un poste de jonction de plusieurs lignes de transport d'énergie. Ainsi, dans le cas où les tronçons 6 et 8 appartiennent à deux lignes de transport d'énergie distinctes, il est possible, avec l'appareil montré à la Figure 3, de faire un transfert de puissance d'une des lignes de transport à l'autre.

Dans le cas présent, selon la méthode en vertu de la présente invention, dans l'étape a), une unité de puissance additionnelle est fournie pour former un ensemble de deux unités de puissance 18; dans l'étape b), la puissance est convertie au moyen des deux convertisseurs de puissance 18; et dans l'étape c), les deux unités de puissance sont connectées et déconnectées au moyen de leur commutateur 26 respectivement au conducteur 12 de la ligne de phase A appartenant respectivement aux tronçons 6 et 8, les unités de puissance 15 et 16 partageant un élément électrique commun 24 pour permettre un écoulement de puissance entre les deux tronçons 6 et 8.

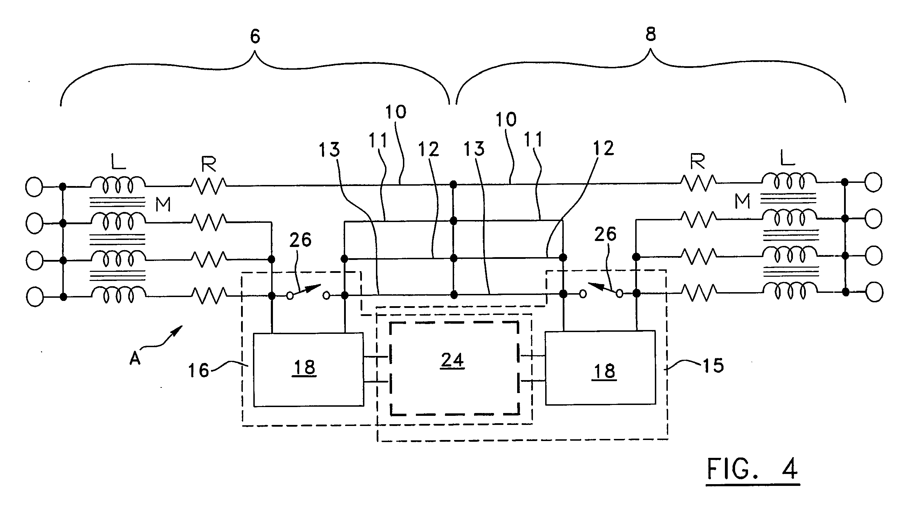

Si on se réfère maintenant à la Figure 4, le commutateur 26 de chaque unité de puissance 15 ou 16 est apte à connecter et déconnecter, pour la ligne de phase A du tronçon correspondant 6 ou 8, n-1 conducteurs qui sont court-circuités entre eux de chaque côté du commutateur. Dans le cas présent, le nombre de conducteurs étant égal à 4, trois conducteurs sont court-circuités entre eux de chaque côté du commutateur correspondant. Dans le cas présent, selon la méthode en vertu de la présente invention, dans l'étape c), le commutateur 26 de chaque unité de puissance 15 ou 16 connecte et déconnecte, pour la ligne de phase A du tronçon 6 ou 8, trois conducteurs qui sont court-circuités entre eux de chaque côté du commutateur.

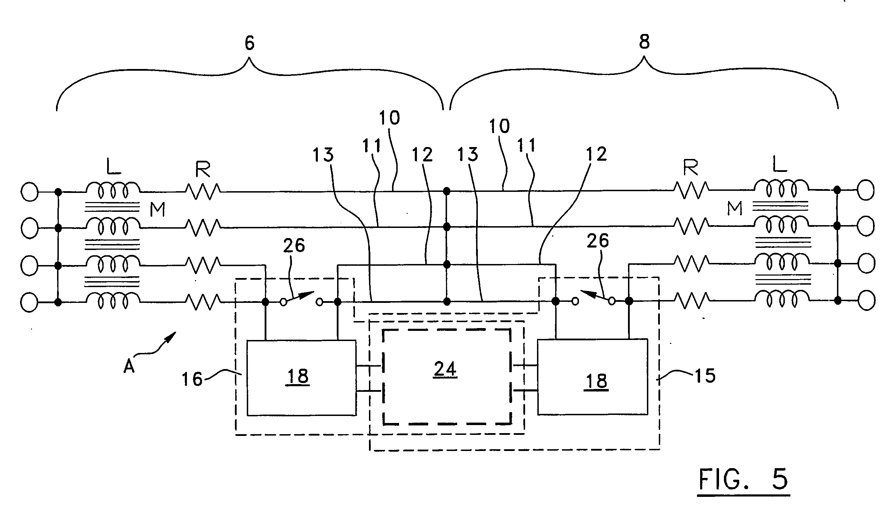

Si on se réfère maintenant à la Figure 5, le commutateur 26 de chaque unité de puissance 15 ou 16 est apte à connecter et déconnecter, pour la ligne de phase A du tronçon correspondant 6 ou 8 plus d'un et au maximum n-1 conducteurs qui sont court-circuités entre eux de chaque côté du commutateur correspondant 26. Dans le cas présent, le nombre de conducteurs est égal à quatre, et deux des quatre conducteurs sont court-circuités entre eux de chaque côté du commutateur correspondant. Dans le cas présent, selon la méthode en vertu de la présente invention, dans l'étape c), le commutateur 26 de chaque unité de puissance 15 ou 16 connecte et déconnecte, pour la ligne de phase A du tronçon correspondant 6 ou 8, deux conducteurs qui sont court-circuités entre eux de chaque côté du commutateur 26.

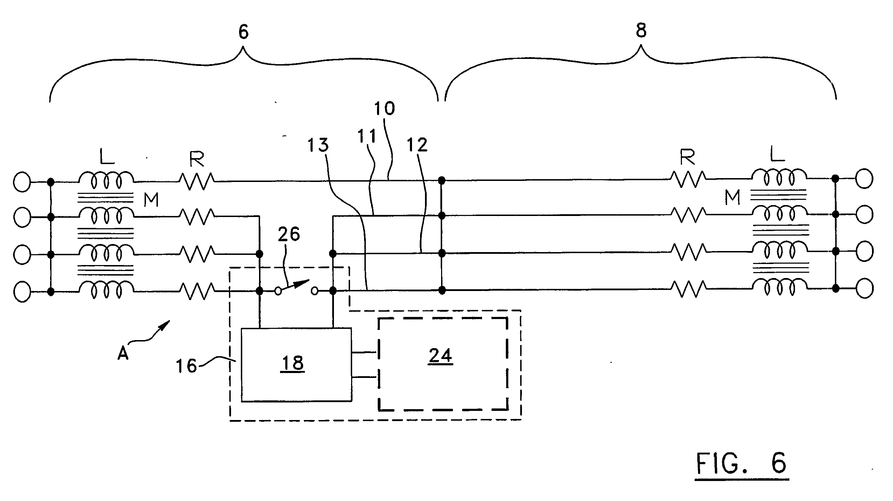

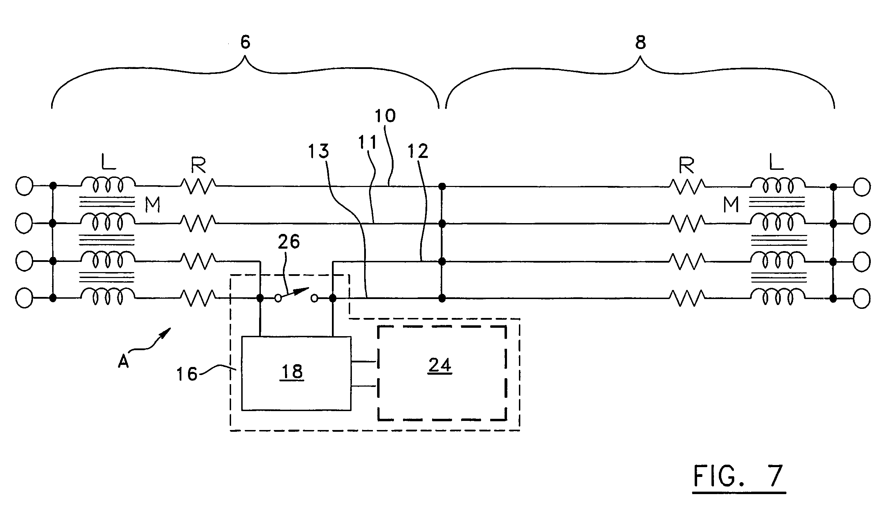

Si on se réfère maintenant aux Figures 6 et 7, le commutateur 26 est apte à connecter et déconnecter plus d'un et au maximum n-1 conducteurs de la ligne de phase A du tronçon 6, lesdits plus d'un et au maximum n-1 conducteurs étant court-circuités entre eux de chaque côté du commutateur 26. Dans le cas présent, dans la Figure 6, les conducteurs sont au nombre de quatre, trois des quatre conducteurs étant court-circuités entre eux de chaque côté du commutateur 26. Dans le cas de la Figure 7, les conducteurs sont au nombre de quatre mais seulement deux des quatre conducteurs sont court-circuités entre eux de chaque côté du commutateur 26. Dans le cas présent, selon la méthode en vertu de la présente invention, dans l'étape c), le commutateur 26 connecte et déconnecte trois (Figure 6) ou deux (Figure 7) conducteurs de la ligne de phase A appartenant au tronçon 6. Les trois (Figure 6) ou les deux (Figure 7) conducteurs sont court-circuités entre eux de chaque côté du commutateur 26.

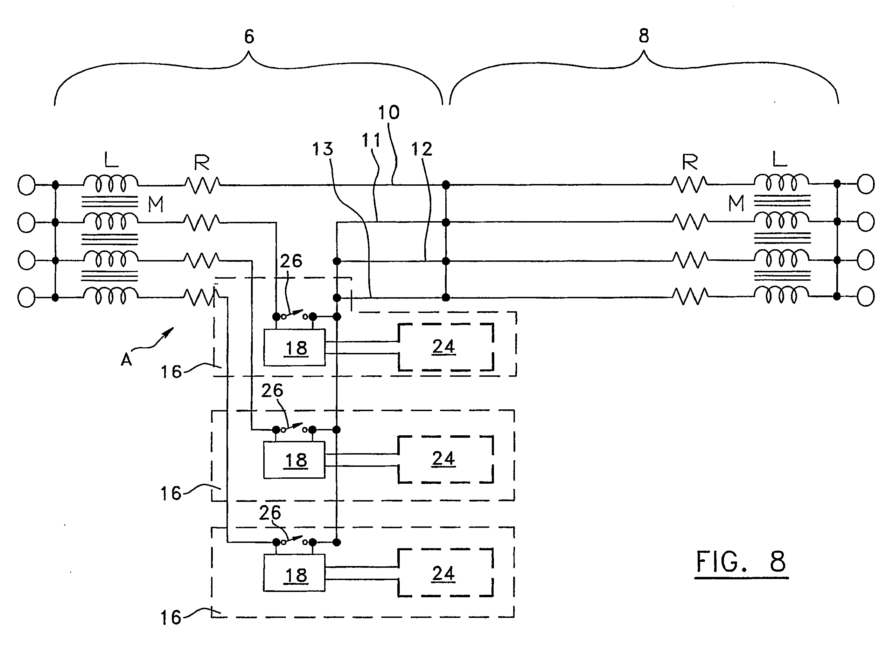

Si on se réfère maintenant à la Figure 8, l'appareil comprend au moins une unité de puissance additionnelle pour former un premier ensemble de n-1 unités de puissance. Dans le cas présent, étant donné que le nombre de conducteurs est de quatre, le premier ensemble d'unités de puissance est composé de trois unités. Les commutateurs 26 des trois unités de puissance sont aptes à connecter et déconnecter respectivement trois conducteurs 11, 12 et 13 de la ligne de phase A appartenant au tronçon 6. Les trois conducteurs 11, 12 et 13 sont court-circuités entre eux sur un côté des commutateurs 26. Dans le cas présent, en vertu de la méthode selon la présente invention, dans l'étape a), deux unités de puissance additionnelles sont fournies pour former le premier ensemble de trois unités de puissance; dans l'étape b), la puissance est convertie par les trois convertisseurs de puissance 18; et dans l'étape c), les trois unités de puissance 16 sont connectées et déconnectées au moyen de leur commutateur 26 respectivement aux trois conducteurs 11, 12 et 13 de la ligne de phase A appartenant au tronçon 6, les trois conducteurs 11, 12 et 13 étant court-circuités entre eux sur un côté des commutateurs 26.

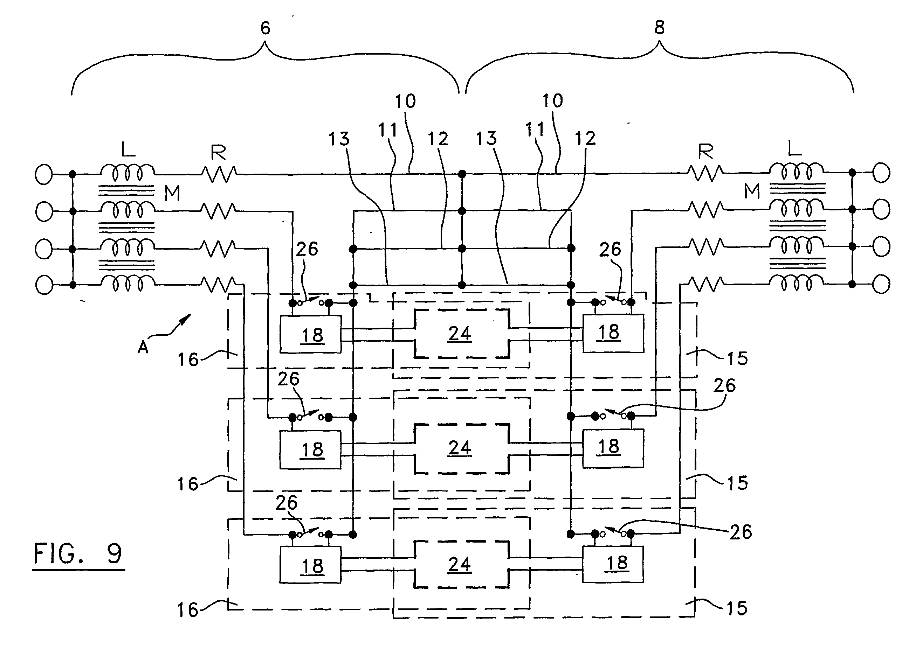

Si on se réfère maintenant à la Figure 9, l'appareil comprend au moins une unité de puissance additionnelle pour former un second ensemble de n-1 unités de puissance. Dans le cas présent, étant donné que le nombre n de conducteurs de la ligne de phase A est égal à quatre, trois unités de puissance additionnelles 15 sont requises pour former le second ensemble de trois unités de puissance 15. Les commutateurs 26 des trois unités de puissance 15 du second ensemble sont aptes à connecter et déconnecter les trois conducteurs 11, 12 et 13 de la ligne de phase A appartenant au tronçon 8. Les trois conducteurs de la ligne de phase A du tronçon 8 sont court-circuités entre eux sur un côté des commutateurs 26 des unités 15. Les premier et second ensembles d'unités de puissance 15 et 16 partagent des éléments électriques communs 24 pour permettre un écoulement de puissance entre les deux tronçons 6 et 8.

Dans le cas présent, selon la méthode en vertu de la présente invention, dans l'étape a), trois unités de puissance additionnelles 15 sont fournies pour former le deuxième ensemble de trois unités de puissance 15; dans l'étape b), la puissance est convertie par au moins deux des convertisseurs de puissance 18 qui appartiennent respectivement aux premier et deuxième ensembles et qui sont jumelés par un élément électrique commun 24; dans l'étape c), les trois unités de puissance 15 du deuxième ensemble sont connectées et déconnectées au moyen de leur commutateur 26 respectivement aux trois conducteurs 11, 12 et 13 de la ligne de phase A appartenant au tronçon 8. Les trois conducteurs 11, 12 et 13 de la ligne de phase A du tronçon 8 sont court-circuités entre eux sur un côté des commutateurs correspondants 26. Lesdits au moins deux convertisseurs de puissance permettent un écoulement de puissance entre les tronçons 6 et 8.

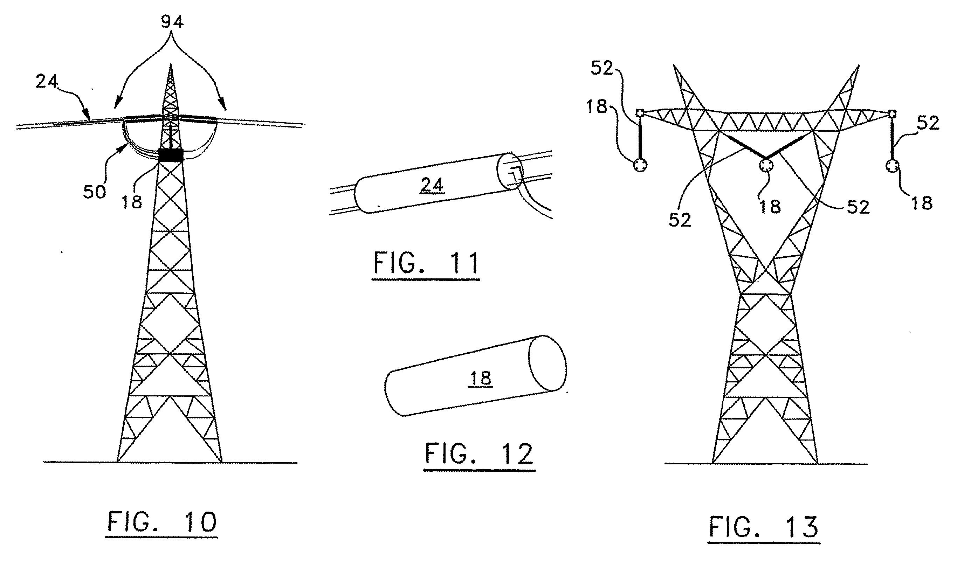

Si on se réfère maintenant aux Figures 10 à 13, on peut voir un pylône muni d'un appareil selon la présente invention. Les convertisseurs 18 et l'élément électrique 24 peuvent être montés tel que montré dans ces figures. Les convertisseurs 18 sont supportés par des supports 52. Sur la Figure 10, on peut voir que les convertisseurs 18 n'ont pas à supporter la tension mécanique qui est présente dans la ligne de transmission 94. Des cavaliers 50 supportent les convertisseurs 18. Les éléments électriques 24 tels que des condensateurs, des résistances ou des batteries lorsque requis peuvent être localisés à l'intérieur de l'espace défini par les conducteurs d'une ligne de phase du tronçon tel que montré aux Figures 10 et 11. Si l'unité de puissance à installer est relativement grosse, l'utilisation d'une plate-forme peut être envisagée.

## Revendications

1. Appareil pour modifier un écoulement de puissance dans un tronçon (6,8) d'une ligne de transport d'énergie électrique, chaque tronçon incluant des lignes de phase (A) chacune ayant n conducteurs (10,12) isolés électriquement les uns des autres et court-circuités aux extrémités (14) du tronçon, l'appareil comprenant une unité d'échange de puissance (16) incluant:
un convertisseur de puissance (18) pour convertir de la puissance entre des première et deuxième paires de bornes (20,22), la première paire de bornes (20) étant connectée en série avec au moins un conducteur (12) du tronçon (6) ; et
un élément électrique (24) branché à la deuxième paire de bornes (22) et apte à faire circuler de la puissance à travers le convertisseur de puissance (18) pour modifier ledit écoulement de puissance.

2. Appareil selon la revendication 1, dans lequel l'unité d'échange de puissance (16) comprend en outre un commutateur (26) pour connecter et déconnecter de façon sélective la première paire de bornes (20) en série avec ledit au moins un conducteur (12) du tronçon (6), en réponse à des signaux de contrôle.

3. Appareil selon la revendication 2, comprenant n-1 unités de puissance aptes à être branchées au moyen de leur commutateur (26) respectivement à n-1 conducteurs d'une ligne de phase appartenant au tronçon.

4. Appareil selon la revendication 2, comprenant au moins une unité de puissance additionnelle pour former un ensemble de n unités de puissance, les n unités de puissance étant aptes à être branchées au moyen de leur commutateur respectivement à n conducteurs d'une ligne de phase appartenant au tronçon.

5. Appareil selon la revendication 2, comprenant une unité de puissance additionnelle (15) pour former un ensemble de deux unités de puissance (15,16), les deux unités de puissance étant aptes à être branchées au moyen de leur commutateur (26) respectivement à des conducteurs de deux lignes de phase appartenant respectivement audit tronçon (6) et à un autre tronçon (8), les deux unités de puissance partageant un élément électrique commun (24) pour permettre un écoulement de puissance entre les deux tronçons.

6. Un appareil selon la revendication 5, dans lequel le commutateur de chaque unité de puissance est apte à connecter et déconnecter, pour la ligne de phase correspondante, n-1 conducteurs qui sont court-circuités entre eux de chaque côté du commutateur.

7. Appareil selon la revendication 5, dans lequel le commutateur (26) de chaque unité de puissance est apte à connecter et déconnecter, pour la ligne de phase correspondante, plus d'un et au maximum n-1 conducteurs qui sont court-circuités entre eux de chaque côté du commutateur.

8. Appareil selon la revendication 2, dans lequel le commutateur (26) est apte à connecter et déconnecter plus d'un et au maximum n-1 conducteurs d'une ligne de phase appartenant au tronçon, lesdits plus d'un et au maximum n-1 conducteurs étant court-circuités entre eux de chaque côté du commutateur.

9. Appareil selon la revendication 2, comprenant au moins une unité de puissance additionnelle pour former un premier ensemble de n-1 unités de puissance, les commutateurs des n-1 unités de puissance étant aptes à connecter et déconnecter respectivement n-1 conducteurs d'une ligne de phase appartenant au tronçon, lesdits n-1 conducteurs étant court-circuités entre eux sur un côté des commutateurs.

10. Appareil selon la revendication 9, comprenant au moins une unité de puissance additionnelle pour former un second ensemble de n-1 unités de puissance, les commutateurs des n-1 unités de puissance du second ensemble étant apte à connecter et déconnecter respectivement n-1 conducteurs d'une seconde ligne de phase appartenant à un autre tronçon, lesdits n-1 conducteurs de la seconde ligne de phase étant court-circuités entre eux sur un côté des commutateurs correspondants, les premier et second ensembles d'unités de puissance partageant des éléments électriques communs pour permettre un écoulement de puissance entre les deux tronçons.

11. Appareil selon la revendication 1, dans lequel l'élément électrique (24) est choisi parmi les éléments suivants: un condensateur (28), une batterie (30), une inductance (32), une résistance, et une résistance (34) branchée en parallèle à un condensateur (36).

12. Méthode pour modifier un écoulement dans un tronçon (6,8) d'une ligne de transport d'énergie électrique, chaque tronçon incluant des lignes de phase (A) chacune ayant n conducteurs (10,12) électriquement isolés les uns des autres et court-circuités aux extrémités (14) du tronçon, la méthode comprenant les étapes suivantes:
a) fournir une unité de puissance (16) incluant un convertisseur de puissance (18) pour convertir de la puissance entre des première et deuxième paires de bornes (20,22), et un élément électrique (24) branché à la deuxième paire de bornes (22) et apte à faire circuler de la puissance à travers le convertisseur de puissance (18), la première paire de bornes (20) étant connectée en série avec au moins un conducteur (12) de tronçon (6); et
b) convertir de la puissance entre les première et deuxième paires de bornes (20,22) au moyen du convertisseur de puissance (18) pour modifier ledit écoulement de puissance.

13. Méthode selon la revendication 12, comprenant en outre l'étape c) de connecter et déconnecter de façon sélective la première paire de bornes (20) en série avec ledit au moins un conducteur du tronçon, au moyen d'un commutateur (26) en réponse à des signaux de contrôle, ledit commutateur faisant partie de l'unité de puissance.

14. Méthode selon la revendication 13, dans laquelle:
dans l'étape a), n-1 unités d'échange de puissance sont fournies;
dans l'étape b), la puissance est convertie par au moins un des n-1 convertisseurs de puissance; et
dans l'étape c), les n-1 unités de puissance sont connectées et déconnectées au moyen de leur commutateur respectivement à n-1 conducteurs d'une ligne de phase appartenant au tronçon.

15. Méthode selon la revendication 13, dans laquelle:
dans l'étape a), au moins une unité de puissance additionnelle (15) est fournie pour former un ensemble de n unités de puissance;
dans l'étape b), la puissance est convertie par au moins un des n convertisseurs de puissance (18); et
dans l'étape c), les n unités de puissance sont connectées et déconnectées au moyen de leur commutateur (26) respectivement à n conducteurs d'une ligne de phase appartenant au tronçon.

16. Une méthode selon la revendication 13, dans laquelle:
dans l'étape a), une unité de puissance additionnelle (15) est fournie pour former un ensemble de deux unités de puissance (15,16);
dans l'étape b), la puissance est convertie au moyen des deux convertisseurs de puissance (18); et
dans l'étape c), les deux unités de puissance sont connectées et déconnectées au moyen de leur commutateur (26) respectivement à des conducteurs de deux lignes de phase appartenant respectivement audit tronçon (6) et à un autre tronçon (8), les deux unités de puissance (15,16) partageant un élément électrique commun (24) pour permettre un écoulement de puissance entre les deux tronçons.

17. Méthode selon la revendication 16, dans laquelle dans l'étape c), le commutateur de chaque unité de puissance connecte et déconnecte, pour la ligne de phase correspondante, n-1 conducteurs qui sont court-circuités entre eux de chaque côté du commutateur.

18. Méthode selon la revendication 16, dans laquelle dans l'étape c), le commutateur de chaque unité de puissance connecte et déconnecte, pour la ligne de phase correspondante, plus d'un et au maximum n-1 conducteurs qui sont court-circuités entre eux de chaque côté du commutateur.

19. Méthode selon la revendication 13, dans laquelle dans l'étape c), le commutateur connecte et déconnecte plus d'un et au maximum n-1 conducteurs d'une ligne de phase appartenant au tronçon, lesdits plus d'un et au maximum n-1 conducteurs étant court-circuités entre eux de chaque côté du commutateur.

20. Méthode selon la revendication 13, dans laquelle:
dans l'étape a), au moins une unité de puissance additionnelle est fournie pour former un premier ensemble de n-1 unités de puissance;
dans l'étape b), la puissance est convertie par au moins un des n-1 convertisseurs de puissance; et
dans l'étape c), les n-1 unités de puissance sont connectées et déconnectées au moyen de leur commutateur respectivement à n-1 conducteurs d'une ligne de phase appartenant au tronçon, lesdits n-1 conducteurs étant court-circuités entre eux sur un côté des commutateurs.

21. Méthode selon la revendication 20, dans laquelle:
dans l'étape a), au moins une unité de puissance additionnelle est fournie pour former un deuxième ensemble de n-1 unités de puissance;
dans l'étape b), la puissance est convertie par au moins deux des convertisseurs de puissance qui appartiennent respectivement au premier et deuxième ensemble et qui sont jumelés par un élément électrique commun; et
dans l'étape c), les n-1 unités de puissance du deuxième ensemble sont connectées et déconnectées au moyen de leur commutateur respectivement à n-1 conducteurs d'une ligne, de phase appartenant à un deuxième tronçon, lesdits n-1 conducteurs de la ligne de phase appartenant au deuxième tronçon étant court-circuités entre eux sur un côté des commutateurs correspondants, lesdits au moins deux convertisseurs de puissance permettant un écoulement de puissance entre les deux tronçons.

## Claims

1. Apparatus for modifying a power flow in a segment (6, 8) of an electric power line, each segment including phase lines (A) each having n conductors (10, 12) electrically insulated from one another and short-circuited at ends (14) of the segment, the apparatus comprising a power exchange unit (16) including:
a power converter (18) for converting power between first and second pairs of terminals (20, 22), the first pair of terminals (20) being connected in series with at least one conductor (12) of the segment (16); and
an electric component (24) connected to the second pair of terminals (22) and capable of circulating power through the power converter (18) for modifying said power flow.

2. Apparatus according to claim 1, wherein the power exchange unit (16) further comprises a switch (26) for selectively connecting and disconnecting the first pair of terminals (20) in series with said at least one conductor (12) of the segment (6), in response to control signals.

3. Apparatus according to claim 2, comprising n-1 power units connectable by means of their switch (26) respectively to n-1 conductors of a phase line belonging to the segment.

4. Apparatus according to claim 2, comprising at least one additional power unit for forming a set of n power units, the n power units being connectable by means of their switch respectively to n conductors of a phase line belonging to the segment.

5. Apparatus according to claim 2, comprising an additional power unit (15) for forming a set of two power units (15, 16) the two power units being connectable by means of their switch (26) respectively to conductors of two phase lines belonging respectively to said segment (6) and to another segment (8), the two power units sharing a common electric component (24) for allowing a power flow between the two segments.

6. Apparatus according to claim 5, wherein the switch of each power unit is able to connect and disconnect, for the corresponding phase line, n-1 conductors that are short-circuited among each other on each side of the switch.

7. Apparatus according to claim 5, wherein the switch (26) of each power unit is able to connect and disconnect, for the corresponding phase line, more than one and at most n-1 conductors that are short-circuited among each other on each side of the switch.

8. Apparatus according to claim 2, wherein the switch (26) is able to connect and disconnect more than one and at most n-1 conductors of a phase line belonging to the segment, said more than one and at most n-1 conductors being short-circuited among each other on each side of the switch.

9. Apparatus according to claim 2, comprising at least one additional power unit for forming a first set of n-1 power units, the switches of the n-1 power units being able to connect and disconnect respectively n-1 conductors of a phase line belonging to the segment, said n-1 conductors being short-circuited among each other on a side of the switches.

10. Apparatus according to claim 9, comprising at least one additional power unit for forming a second set of n-1 power units, the switches of the n-1 power units of the second set being able to connect and disconnect respectively n-1 conductors of a second phase line belonging to another segment, said n-1 conductors of the second phase line being short-circuited among each other on a side of the corresponding switches, the first and second sets of power units sharing common electric components for allowing a power flow between the two segments.

11. Apparatus according to claim 1, wherein the electric component (24) is selected among the following components: a capacitor (28), a battery (30), an inductance (32), a resistance, and a resistance (34) connected in parallel to a capacitor (36).

12. Method for modifying a power flow in a segment (6, 8) of an electric power line, each segment having phase lines (A) each having n conductors (10, 12) insulated from one another and short-circuited at ends (14) of the segment, the method comprising the following steps:
a) providing a power unit (16) including a power converter (18) for converting power between first and second pairs of terminals (20, 22), and an electric component (24) connected to the second pair of terminals (22) and capable of circulating power through the power converter (18), the first pair of terminals (20) being connected in series with at least one conductor (12) of the segment (6); and
b) converting power between the first and second pairs of terminals (20, 22) by means of the power converter (18) for modifying said power flow.

13. Method according to claim 12, further comprising step c) of selectively connecting and disconnecting the first pair of terminals (20) in series with said at least one conductor of the segment, by means of a switch (26) in response to control signals, said switch being part of the power unit.

14. Method according to claim 13, wherein:
in step a), n-1 power exchange units are provided;
in step b), the power is converted by at least one of the n-1 power converters; and
in step c), the n-1 power units are connected and disconnected by means of their switch respectively to n-1 conductors of a phase line belonging to the segment.

15. Method according to claim 13, wherein:
in step a), at least one additional power unit (15) is provided for forming a set of n power units;
in step b), the power is converted by at least one of the n power converters (18); and
in step c), the n power units are connected and disconnected by means of their switch (26) respectively to n conductors of a phase line belonging to the segment.

16. Method according to claim 13, wherein:
in step a), an additional power unit (15) is provided for forming a set of two power units (15, 16);
in step b), the power is converted by means of the two power converters (18); and
in step c), the two power units are connected and disconnected by means of their switch (26) respectively to conductors of two phase lines belonging respectively to said segment (6) and to another segment (8), the two power units (15, 16) sharing a common electric component (24) for allowing a power flow between the two segments.

17. Method according to claim 16, wherein in step c), the switch of each power unit connects and disconnects, for the corresponding phase line, n-1 conductors that are short-circuited among each other on each side of the switch.

18. Method according to claim 16, wherein in step c), the switch of each power unit connects and disconnects, for the corresponding phase line, more than one and at most n-1 conductors that are short-circuited among each other on each side of the switch.

19. Method according to claim 13, wherein in step c), the switch connects and disconnects more than one and at most n-1 conductors of a phase line belonging to the segment, said more than one and at most-1 conductors being short-circuited among each other on each side of the switch.

20. Method according to claim 13, wherein:
in step a), at least one additional power unit is provided for forming a first set of n-1 power units;
in step b), the power is converted by at least one of the n-1 power converters; and
in step c), the n-1 power units are connected and disconnected by means of their switch respectively to n-1 conductors of a phase line belonging to the segment, said n-1 conductors being short-circuited among each other on a side of the switches.

21. Method according to claim 20, wherein:
in step a), at least one additional power unit is provided for forming a second set of n-1 power units;
in step b), the power is converted by at least two of the power converters that belong respectively to the first and second sets and that are paired together by a common electric component; and
in step c), the n-1 power units of the second set are connected and disconnected by means of their switch respectively to n-1 conductors of a phase line belonging to a second segment, said n-1 conductors of the phase line belonging to the second segment being short-circuited among each other on a side of the corresponding switches, said at least two power converters allowing a power flow between the two segments.

## Patentansprüche

1. Vorrichtung zum Ändern des Leistungsflusses in einem Leitungsabschnitt (6,8) einer Hochspannungsleitung, wobei jeder Leitungsabschnitt Phasenleitungen (A) aufweist, die jeweils n voneinander elektrisch isolierte Leiter (10,12) haben, die an den Enden (14) des Leitungsabschnitts kurzgeschlossen sind, wobei die Vorrichtung eine Leistungsaustauscheinheit (16) umfasst, die Folgendes aufweist:
einen Stromrichter (18), um Leistung zwischen den ersten und zweiten Klemmenpaaren (20,22) umzuwandeln, wobei das erste Klemmenpaar (20) mit mindestens einem Leiter (12) des Leitungsabschnitts (6) in Reihe geschaltet ist; und ein elektrisches Bauelement (24), das an das zweite Klemmenpaar (22) angeschlossen ist und Leistung durch den Stromrichter (18) fließen lassen kann, um den Leistungsfluss zu ändern.

2. Vorrichtung nach Anspruch 1, in welcher die Leistungsaustauscheinheit (16) außerdem einen Schalter (26) umfasst, um das erste Klemmenpaar (20) im Ansprechen auf Kontrollsignale selektiv mit dem mindestens einen Leiter (12) des Leitungsabschnitts (6) in Reihe zu schalten und von diesem zu trennen.

3. Vorrichtung nach Anspruch 2, n-1 Leistungseinheiten umfassend, die über ihren Schalter (26) jeweils an n-1 Leiter einer zu dem Leitungsabschnitt gehörenden Phasenleitung angeschlossen werden können.

4. Vorrichtung nach Anspruch 2, mindestens eine zusätzliche Leistungseinheit umfassend zur Bildung eines Satzes von n Leistungseinheiten, wobei die n Leistungseinheiten über ihren Schalter jeweils an n Leiter einer zu dem Leitungsabschnitt gehörenden Phasenleitung angeschlossen werden können.

5. Vorrichtung nach Anspruch 2, eine zusätzliche Leistungseinheit (15) umfassend zur Bildung eines Satzes von zwei Leistungseinheiten (15,16), wobei die beiden Leistungseinheiten über ihren Schalter (26) jeweils an Leiter von zwei Phasenleitungen angeschlossen werden können, die jeweils zu dem Leitungsabschnitt (6) und einem anderen Leitungsabschnitt (8) gehören, wobei die beiden Leistungseinheiten sich ein gemeinsames elektrisches Bauelement (24) teilen, um einen Leistungsfluss zwischen den beiden Leitungsabschnitten zu ermöglichen.

6. Vorrichtung nach Anspruch 5, bei welcher der Schalter jeder Leistungseinheit geeignet ist, für die entsprechende Phasenleitung n-1 Leiter, die auf beiden Seiten des Schalters miteinander kurzgeschlossen sind, zu verbinden und zu trennen.

7. Vorrichtung nach Anspruch 5, bei welcher der Schalter (26) jeder Leistungseinheit geeignet ist, für die entsprechende Phasenleitung mehr als einen und maximal n-1 Leiter, die auf beiden Seiten des Schalters miteinander kurzgeschlossen sind, zu verbinden und zu trennen.

8. Vorrichtung nach Anspruch 2, bei welcher der Schalter (26) geeignet ist, mehr als einen und maximal n-1 Leiter einer zu dem Leitungsabschnitt gehörenden Phasenleitung zu verbinden und zu trennen, wobei die mehr als ein und maximal n-1 Leiter auf beiden Seiten des Schalters miteinander kurzgeschlossen sind.

9. Vorrichtung nach Anspruch 2, mindestens eine zusätzliche Leistungseinheit umfassend zur Bildung eines ersten Satzes von n-1 Leistungseinheiten, wobei die Schalter der n-1 Leistungseinheiten geeignet sind, jeweils n-1 Leiter einer zu dem Leitungsabschnitt gehörenden Phasenleitung zu verbinden und zu trennen und wobei die n-1 Leiter auf einer Seite der Schalter miteinander kurzgeschlossen sind.

10. Vorrichtung nach Anspruch 9, mindestens eine zusätzliche Leistungseinheit umfassend zur Bildung eines zweiten Satzes von n-1 Leistungseinheiten, wobei die Schalter der n-1 Leistungseinheiten des zweiten Satzes geeignet sind, jeweils n-1 Leiter einer zweiten zu einem anderen Leitungsabschnitt gehörenden Phasenleitung zu verbinden und zu trennen und wobei die n-1 Leiter der zweiten Phasenleitung auf einer Seite der entsprechenden Schalter miteinander kurzgeschlossen sind und der erste und der zweite Satz von Leistungseinheiten sich gemeinsame elektrische Bauelemente teilen, um einen Leistungsfluss zwischen den beiden Leitungsabschnitten zu ermöglichen.

11. Vorrichtung nach Anspruch 1, bei welcher das elektrische Bauelement (24) unter den folgenden Elementen ausgewählt wird: ein Kondensator (28), eine Batterie (30), ein induktiver Widerstand (32), ein Widerstand und ein zu einem Kondensator (36) parallelgeschalteter Widerstand (34).

12. Verfahren zum Ändern des Leistungsflusses in einem Leitungsabschnitt (6,8) einer Hochspannungsleitung, wobei jeder Leitungsabschnitt Phasenleitungen (A) aufweist, die jeweils n voneinander elektrisch isolierte Leiter (10,12) haben, die an den Enden (14) des Leitungsabschnitts kurzgeschlossen sind, wobei das Verfahren die folgenden Schritte umfasst:
a) Bereitstellen einer Leistungseinheit (16) mit einem Stromrichter (18), um Leistung zwischen den ersten und zweiten Klemmenpaaren (20,22) und einem elektrischen Bauelement (24) umzuwandeln, das an das zweite Klemmenpaar (22) angeschlossen ist und Leistung durch den Stromrichter (18) fließen lassen kann, wobei das erste Klemmenpaar (20) mit mindestens einem Leiter (12) des Leitungsabschnitts (6) in Reihe geschaltet ist; und
b) Umwandeln von Leistung zwischen den ersten und zweiten Klemmenpaaren (20,22) über den Stromrichter (18), um den Leistungsfluss zu ändern.

13. Verfahren nach Anspruch 12, welches außerdem den Schritt c) des selektiven In-Reihe-Schaltens und Trennens des ersten Klemmenpaars (20) mit/von dem mindestens einen Leiter des Leitungsabschnitts über einen Schalter (26) im Ansprechen auf Kontrollsignale umfasst, wobei der Schalter zu der Leistungseinheit gehört.

14. Verfahren nach Anspruch 13, bei welchem:
im Verfahrensschritt a) n-1 Leistungsaustauscheinheiten bereitgestellt werden;
im Verfahrensschritt b) die Leistung durch mindestens einen der n-1 Stromrichter umgewandelt wird; und
im Verfahrensschritt c) die n-1 Leistungseinheiten über ihren Schalter jeweils an n-1 Leiter einer zum Leitungsabschnitt gehörenden Phasenleitung angeschlossen und von diesen getrennt werden.

15. Verfahren nach Anspruch 13, bei welchem:
im Verfahrensschritt a) mindestens eine zusätzliche Leistungseinheit (15) bereitgestellt wird, zur Bildung eines Satzes von n Leistungseinheiten;
im Verfahrensschritt b) die Leistung durch mindestens einen der n Stromrichter (18) umgewandelt wird; und
im Verfahrensschritt c) die n Leistungseinheiten über ihren Schalter (26) jeweils an n Leiter einer zum Leitungsabschnitt gehörenden Phasenleitung angeschlossen und von diesen getrennt werden.

16. Verfahren nach Anspruch 13, bei welchem:
im Verfahrensschritt a) eine zusätzliche Leistungseinheit (15) bereitgestellt wird zur Bildung eines Satzes von zwei Leistungseinheiten (15,16);
im Verfahrensschritt b) die Leistung über die beiden Stromrichter (18) umgewandelt wird; und
im Verfahrensschritt c) die beiden Leistungseinheiten über ihren Schalter (26) jeweils an Leiter von zwei Phasenleitungen angeschlossen und von diesen getrennt werden, die jeweils zu dem Leitungsabschnitt (6) und zu einem anderen Leitungsabschnitt (8) gehören, wobei die beiden Leistungseinheiten (15,16) sich ein gemeinsames elektrisches Bauelement (24) teilen, um einen Leistungsfluss zwischen den beiden Leitungsabschnitten zu ermöglichen.

17. Verfahren nach Anspruch 16, bei welchem im Verfahrensschritt c) der Schalter jeder Leistungseinheit für die entsprechende Phasenleitung n-1 Leiter verbindet und trennt, die auf beiden Seiten des Schalters miteinander kurzgeschlossen sind.

18. Verfahren nach Anspruch 16, bei welchem im Verfahrensschritt c) der Schalter jeder Leistungseinheit für die entsprechende Phasenleitung mehr als einen und maximal n-1 Leiter verbindet und trennt, die auf beiden Seiten des Schalters miteinander kurzgeschlossen sind.

19. Verfahren nach Anspruch 13, bei welchem im Verfahrensschritt c) der Schalter mehr als einen und maximal n-1 Leiter einer zu dem Leitungsabschnitt gehörenden Phasenleitung verbindet und trennt, wobei die mehr als ein und maximal n-1 Leiter auf beiden Seiten des Schalters miteinander kurzgeschlossen sind.

20. Verfahren nach Anspruch 13, bei welchem:
im Verfahrensschritt a) mindestens eine zusätzliche Leistungseinheit bereitgestellt wird zur Bildung eines ersten Satzes von n-1 Leistungseinheiten;
im Verfahrensschritt b) die Leistung durch mindestens einen der n-1 Stromrichter umgewandelt wird; und
im Verfahrensschritt c) die n-1 Leistungseinheiten über ihren Schalter jeweils an n-1 Leiter einer zum Leitungsabschnitt gehörenden Phasenleitung angeschlossen und von diesen getrennt werden, wobei die n-1 Leiter der zweiten Phasenleitung auf einer Seite der Schalter miteinander kurzgeschlossen sind.

21. Verfahren nach Anspruch 20, bei welchem:
im Verfahrensschritt a) mindestens eine zusätzliche Leistungseinheit bereitgestellt wird zur Bildung eines zweiten Satzes von n-1 Leistungseinheiten;
im Verfahrensschritt b) die Leistung über mindestens zwei der Stromrichter umgewandelt wird, die jeweils zum ersten und zweiten Satz gehören und die durch ein gemeinsames elektrisches Bauelement fest verbunden sind; und
im Verfahrensschritt c) die n-1 Leistungseinheiten des zweiten Satzes über ihren Schalter jeweils an n-1 Leiter einer zu einem zweiten Leitungsabschnitt gehörenden Phasenleitung angeschlossen und von diesen getrennt werden, wobei die n-1 Leiter der zu dem zweiten Leitungsabschnitt gehörenden Phasenleitung auf einer Seite der entsprechenden Schalter miteinander kurzgeschlossen sind und die mindestens zwei Stromrichter einen Leistungsfluss zwischen den beiden Leitungsabschnitten ermöglichen.
